# EUROPEAN PATENT APPLICATION

(11) **EP 4 407 340 A1**
(43) Date of publication of application: **31.07.2024**
(21) Application number: 23153967.7
(22) Date of filing: 30.01.2023
(51) Int. Cl.: G01S 7/41, G01S 13/58

(54) **METHOD, APPARATUS AND COMPUTER PROGRAM FOR CLASSIFYING RADAR DATA FROM A SCENE, METHOD, APPARATUS AND COMPUTER PROGRAM FOR TRAINING ONE OR MORE NEURAL NETWORKS TO CLASSIFY RADAR DATA**

(71) Applicant: Infineon Technologies AG, 85579 Neubiberg (DE)
(72) Inventor: PENG, Xiangyuan, 80939 München (DE); HAZRA, Souvik, 81669 München (DE); SERVADEI, Lorenzo, 81539 München (DE)
(74) Representative: 2SPL Patentanwälte PartG mbB

(57) **Abstract**

Examples relate to a method, an apparatus and a computer program for classifying radar data from a scene, and a method, an apparatus and a computer program for training one or more neural networks to classify radar data. The method (10) for classifying radar data from a scene comprises obtaining (11) radar data from the scene and determining (12) cadence-velocity data and micro range-Doppler data from the radar data. The method (10) further comprises encoding (13) the cadence velocity data to obtain a cadence-velocity feature vector using a first trained autoencoder and encoding the micro range-Doppler data to obtain a range-Doppler feature vector using a second trained autoencoder. The method (10) further comprises decoding (14) the cadence-velocity feature vector to obtain reconstructed cadence-velocity data using a first trained decoder and decoding the range-Doppler feature vector to obtain reconstructed range-Doppler data using a second trained decoder. The method (10) further comprises determining (15) first reconstruction loss information based on the cadence-velocity data and the reconstructed cadence-velocity data and determining second reconstruction loss information based on the range-Doppler data and the reconstructed range-Doppler data. The method (10) further comprises classifying (16) the radar data based on the first reconstruction loss information and the second reconstruction loss information.

## Description

### Field

Examples relate to classifying radar data and in particular to a method, an apparatus and a computer program for classifying radar data from a scene, and a method, an apparatus and a computer program for training one or more neural networks to classify radar data.

### Background

Radar images are analyzed in many applications to determine the position and further kinematic parameters of objects within the field of view of a radar sensor. For example, a signal processing pipeline involving multiple subsequent processing steps can be used to determine the position of objects within multiple subsequent radar images to, for example, track the object. Radar data can be used to interpret scenes. For example, radar data reflected from a scene may be analyzed as to whether a human is present in the scene or not. However, in ordinary range-Doppler images (RDI) static people are hard to detect. Some concepts may make use of neural networks, which are trained with radar data from a distribution of radar data from known scenes. Still, although micro-Doppler images can recognize small movements, such as human breathing and heartbeat, it is challenging to distinguish between small movements in the environment, such as curtains blown by the wind, working coffee machines, etc., which are considered out-of-distribution (OOD data) and static human beings.

### Summary

There may be a demand for an improved concept for classifying radar data.

An example relates to a method for classifying radar data from a scene. The method comprises obtaining radar data from the scene and determining cadence-velocity data and micro range-Doppler data from the radar data. The method further comprises encoding the cadence velocity data to obtain a cadence-velocity feature vector using a first trained autoencoder and encoding the micro range-Doppler data to obtain a range-Doppler feature vector using a second trained autoencoder. The method further comprises decoding the cadence-velocity feature vector to obtain reconstructed cadence-velocity data using a first trained decoder and decoding the range-Doppler feature vector to obtain reconstructed range-Doppler data using a second trained decoder. The method comprises determining first reconstruction loss information based on the cadence-velocity data and the reconstructed cadence-velocity data and determining second reconstruction loss information based on the range-Doppler data and the reconstructed range-Doppler data. The method further comprises classifying the radar data based on the first reconstruction loss information and the second reconstruction loss information.

Further examples relate to an apparatus for classifying radar data from a scene. The apparatus comprises one or more interface configured to receive radar data from the scene and one or more processing device configured to perform the method as described above.

Another example relates to a method for training one or more neural networks to classify radar data. The method comprises obtaining classified radar data from a scene and determining classified cadence-velocity data and classified micro range-Doppler data from the radar data. The method further comprises training a first autoencoder-decoder pair based on the classified cadence-velocity data to obtain cadence-velocity feature vectors from the first trained autoencoder and training a second autoencoder-decoder pair based on the classified range Doppler data to obtain range-Doppler feature vectors from the second trained autoencoder. The method further comprises training a classifier based on the classified radar data, the cadence-velocity feature vectors and the range-Doppler feature vectors.

Another example relates to an apparatus for training one or more neural networks to classify radar data. The apparatus comprises one or more interface configured to receive radar data from the scene and one or more processing device configured to perform the method described above.

Further examples relate to a computer program having a program code for performing one of the methods described herein, when the computer program is executed on a computer, a processor, or a programmable hardware component.

### Brief description of the Figures

Some examples of apparatuses and/or methods will be described in the following by way of example only, and with reference to the accompanying figures, in which
Fig. 1 shows an example of a method for classifying radar data from a scene;
Fig. 2 shows an example of a method for training one or more neural networks to classify radar data;
Fig. 3 shows an example of an apparatus for classifying radar data from a scene and/or for training one or more neural networks to classify radar data;
Fig. 4 shows an example of preprocessing of radar data;
Fig. 5 shows another example of an apparatus for classifying radar data from a scene;
Fig. 6 shows an energy score distribution and an energy score sample plot in an example scene with a walking human;
Fig. 7 shows an energy score distribution and an energy score sample plot in an example scene without human presence; and
Fig. 8 shows an energy score distribution and an energy score sample plot in an example scene with a sitting human.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

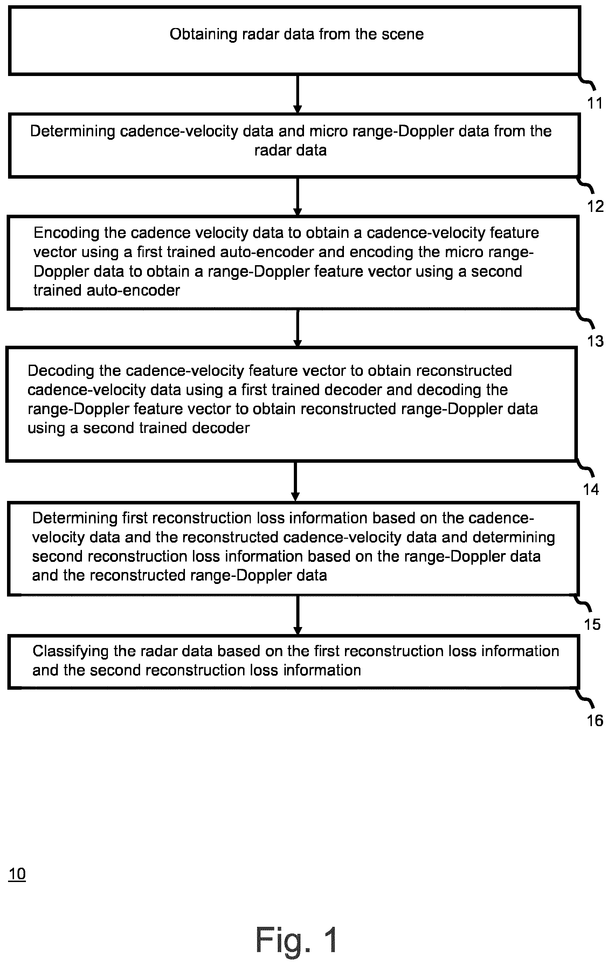

Fig. 1 shows an example of a method 10 for classifying radar data from a scene. The method 10 comprises obtaining 11 radar data from the scene and determining 12 cadence-velocity data and micro range-Doppler data from the radar data. The method 10 further comprises encoding 13 the cadence velocity data to obtain a cadence-velocity feature vector using a first trained autoencoder and encoding the micro range-Doppler data to obtain a range-Doppler feature vector using a second trained autoencoder. The method 10 comprises decoding 14 the cadence-velocity feature vector to obtain reconstructed cadence-velocity data using a first trained decoder and decoding the range-Doppler feature vector to obtain reconstructed range-Doppler data using a second trained decoder. The method 10 further comprises determining 15 first reconstruction loss information based on the cadence-velocity data and the reconstructed cadence-velocity data and determining second reconstruction loss information based on the range-Doppler data and the reconstructed range-Doppler data. The method 10 comprises classifying 16 the radar data based on the first reconstruction loss information and the second reconstruction loss information.

Examples make use of trained encoders and decoders, which tend to generate higher reconstruction losses for OOD data. In examples, the reconstruction loss may be determined by different metrics or measures. For example, distances or differences between original and reconstructed data points may be evaluated. In some examples the squared errors or magnitudes of errors may be accumulated to derive a measure for the reconstruction loss. The reconstruction loss can the be used to classify the input data. For example, the classifying 16 comprises providing information on whether the radar data lies in a data distribution used to train the autoencoders and decoders.

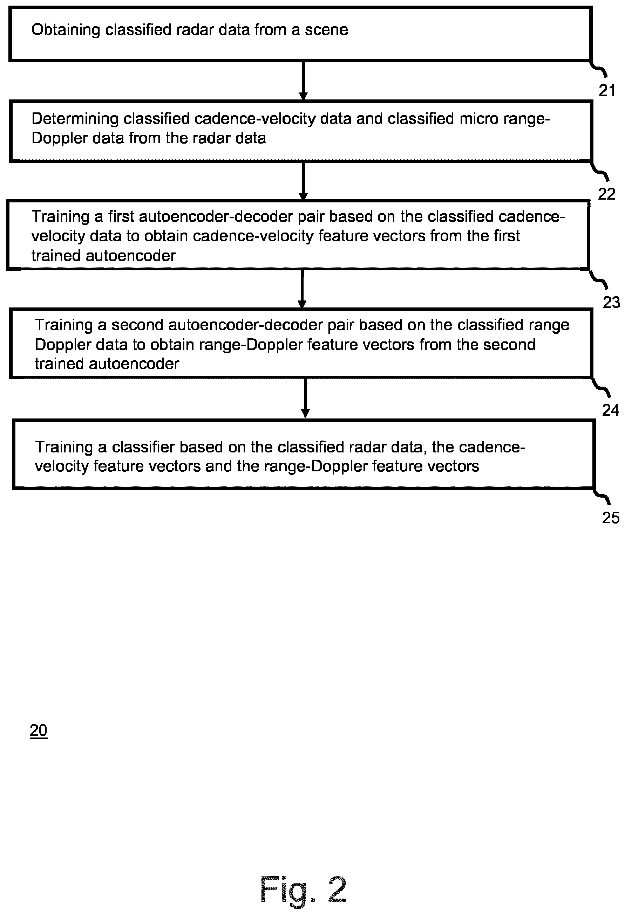

Fig. 2 shows an example of a method 20 for training one or more neural networks to classify radar data. The method 20 comprises obtaining 21 classified radar data from a scene and determining 22 classified cadence-velocity data and classified micro range-Doppler data from the radar data. The method 20 further comprises training 23 a first autoencoder-decoder pair based on the classified cadence-velocity data to obtain cadence-velocity feature vectors from the first trained autoencoder and training 24 a second autoencoder-decoder pair based on the classified range Doppler data to obtain range-Doppler feature vectors from the second trained autoencoder. The method 20 further comprises training 25 a classifier based on the classified radar data, the cadence-velocity feature vectors and the range-Doppler feature vectors.

Training the encoders and decoders based on classified radar data enables using these encoder-decoder pairs for classifying unclassified radar data based on the above-described reconstruction loss.

In examples the obtaining 11, 21 of radar data may comprise receiving and sampling a radar signal reflected from the scene. Hence, a radar signal may be generated and radiated/transmitted using one or more antennas into the scene before receiving its reflection, potentially also using one or more antennas and according receiver structures. Examples of radar technologies are pulsed radar systems, frequency-modulated continuous wave (FCMW), etc. The data may then be sampled (digitized) for further processing. In case of training the data may be classified, for example information may be included on whether there are one or more humans present in the scene or not. The classifying 16 may then comprise providing information on whether one or more humans are present in the scene.

The cadence-velocity data and the (micro) range-Doppler data may be determined from the radar data using signal processing. For example, the radar data, comprising echoes reflected from the scene, may be mapped or transformed into the time-frequency-domain through a time-frequency transform, e.g. some sort of a Fourier transformation like the Fast Fourier Transform (FFT).

In examples, range-Doppler data can be obtained from the time domain radar data using time-frequency transforms, such as the (FFT). For example, the Doppler frequency shift of a constantly moving target is reflected in multiple subsequent receive pulses. Frequency analysis over such a sequence would therefore be indicative of the Doppler shifts and relative velocity of the reflector (between reflector and receiving antenna). Time-delay of different pulses depends on the distance of the reflector (range) and varying time delays are indicative of changing distances for moving targets. Hence, a range-Doppler analysis can be conducted and consequently range Doppler-intensity diagram can be obtained. While the above is true for macro Doppler shifts, which are evoked by a main reflectors, further micro Doppler shifts are also present in a reflected radar signal. The micro-Doppler shifts are Doppler shifts, which are evoked by micro-movements on a macro reflector. Examples are heartbeat or breathing of a (moving) human, spinning blades of a fan in a scene, curtain moving in the wind, etc. The micro-Doppler shifts can be analyzed using sequences of the frequency data. For example, a short-time Fourier transform may be used to obtain a micro range-Doppler data.

Cadence-velocity data may be obtained as frequency transform of time-velocity data. The time-velocity data can be determined from spectrograms ((normalized) frequency components over time) of the range-Doppler data, which can be evaluated using a selection of intensive points over a set of frames. The cadence-velocity provides a measure on how often different velocities repeat. The cadence-velocity data may provide information on a period of each of the components and their maximum micro-Doppler shifts. Components with a specific cadence may be visible along a cadence frequency axis, while their micro-Doppler shift amplitude may be visible along a normalized frequency axis.

Then, cadence velocity data can be obtained by performing another Fourier transform along the time axis on the time-frequency spectrogram.

In examples autoencoders may be used to encode the cadence-velocity and the range-Doppler data. An autoencoder may use a neural network to learn efficient coding of data. The encoding may be trained by attempting to regenerate (decode) the input from the encoding. The autoencoder may learn a representation (encoding) for a set of data also referred to as a feature vector, which is reduced in dimension compared to the input data. The autoencoder is (theoretically) trained to ignore irrelevant information from the input data (e.g. noise). The encoder is mostly trained together with a decoder such that the reconstructed or decoded data matches the input data as much as possible, e.g. so to optimize or minimize a reconstruction loss. For example, the training 23 of the first autoencoder-decoder pair and the training 24 of the second autoencoder-decoder pair comprises training with respect to optimized reconstruction losses at the first and second decoders.

As outlined above, the autoencoder-decoder pair may use one ore more neural network for implementation. A neural network as referred to herein may be an artificial neural network, which uses a computer system to implement artificial intelligence. For example, a neural network is based on a multiplicity of interconnected nodes or so-called neurons, which process and exchange signals. Examples may be implemented using any sort of device, system or machine capable of learning. In further examples, the first trained autoencoder and the first trained decoder may form a first trained generative autoencoder, and the second trained autoencoder and the second trained decoder may form a second generative autoencoder. The first and second encoder/decoders may be subject to deep learning, variational autoencoders and generative adversarial networks (GANs). The autoencoders may use probabilistic generative models that use neural networks as part of their overall structure. The neural network components are typically referred to as the encoder and decoder. The first neural network (encoder) may map the input variable to a latent space that corresponds to the parameters of a variational distribution (space of feature vectors). In this way, the encoder may produce multiple different samples (feature vectors) that all come from the same distribution. The decoder has the opposite function, which is to map from the latent space to the input space, to produce or generate data points. Both networks are typically trained together with the usage of the classified radar data.

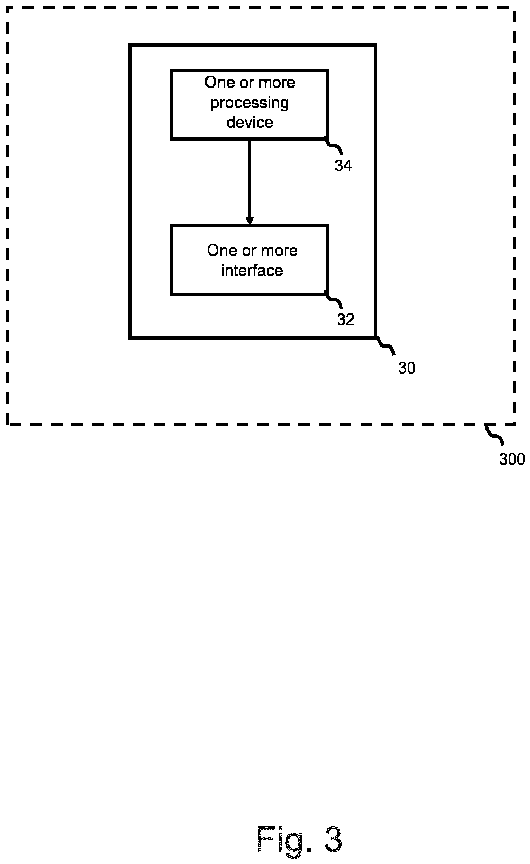

Fig. 3 shows an example of an apparatus 30, which may be configured for classifying radar data from a scene and/or for training one or more neural networks to classify radar data. Such apparatus comprises one or more interface 32 configured to receive radar data from the scene. The one or more interface 32 is coupled to one or more processing device 34. The one or more processing device is configured to perform one of the methods 10, 20 as described herein. Fig. 3 also illustrates an example of a radar classification system 300, which comprises the apparatus 30 and which is shown in broken lines (since it is optional from the perspective of the apparatus 30).

The one or more interface 32 may correspond to any means for obtaining, receiving, transmitting or providing analog or digital signals or information, e.g. any connector, contact, pin, register, input port, output port, conductor, lane, etc., which allows providing or obtaining a signal, information, or radar data. An interface may be wireless or wireline and it may be configured to communicate, i.e. transmit or receive signals, information with further internal or external components. The one or more interfaces 32 may comprise further components to enable, in accordance with an example of one of the methods 10 and/or 20, communication for receiving radar data (and classification thereof in case of training). Such components may include radar transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interface 32 may be coupled to one or more antennas, which may correspond to any transmit and/or receive antennas, such as horn antennas, dipole antennas, patch antennas, sector antennas etc.

As shown in Fig. 3 the respective one or more interface 32 is coupled to the one or more processing device 34 of the apparatus 30. In examples the one or more processing device 34 may be implemented using one or more processing units, one or more processing devices, any means for processing, such as a processor, a computer or a programmable hardware component being operable with accordingly adapted software. In other words, the described functions of the one or more processing device 34 and methods 10, 20 may as well be implemented in software, which is then executed on one or more programmable hardware components. Such hardware components may comprise a general-purpose processor, a Digital Signal Processor (DSP), a micro-controller, etc. The one or more processing device 34 may implement one or more neural networks, machine learning devices, autoencoders, decoders, classifiers etc.

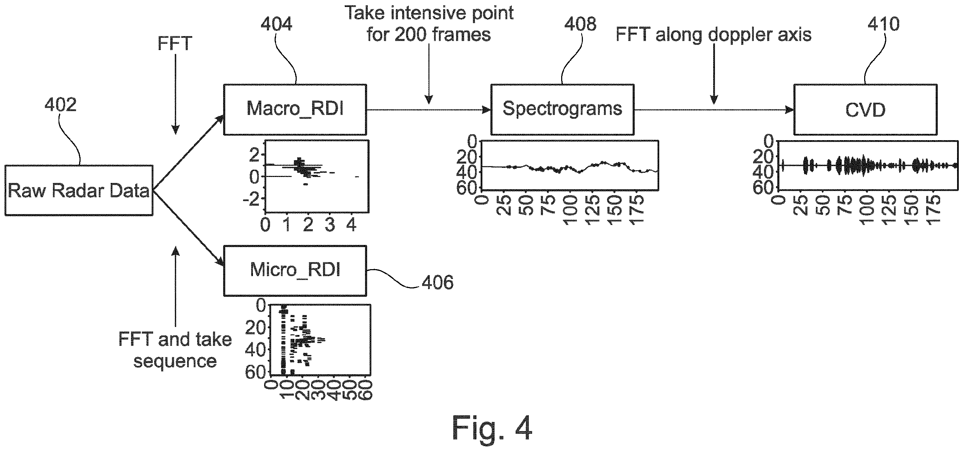

Fig. 4 shows an example of preprocessing of radar data. In Fig. 4 raw radar data is sampled in block 402, which may comprise a radar transmitter and/or receiver, high-frequency processing circuitry, amplifiers, mixers, filters, sampling circuitry etc. At its output raw radar data is provided in term of time samples. FFT is then used to determine macro range-Doppler data or a macro range-Doppler intensity 404. By taking a sequence from the FFT micro range Doppler 406 data can be obtained. In the present example an intensive point is taken for 200 frames to obtain spectrograms 408. Further FFT along the Doppler axis yields the cadence-velocity data 410 (cadence-velocity data or diagram, CVD).

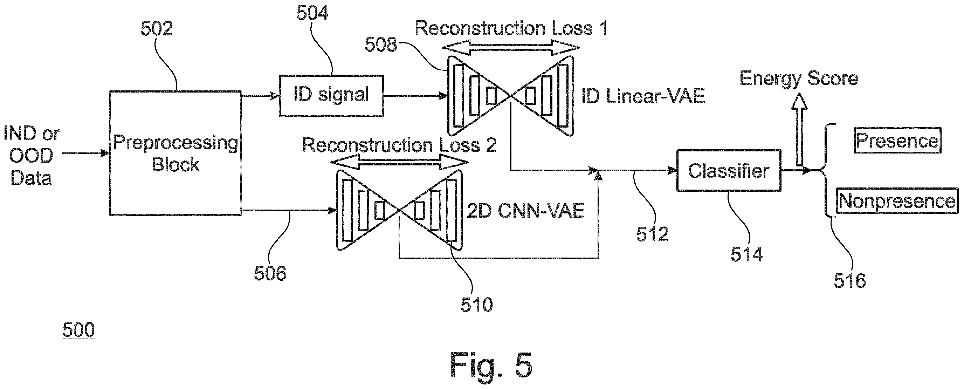

Fig. 5 shows another example of an apparatus 500 for classifying radar data from a scene. In the apparatus 500 shown in Fig. 5 radar data, which can be in distribution (IND) or OOD, is input into a preprocessing block 502. The preprocessing block 502 preprocesses the data and outputs one dimensional cadence-velocity data 504- and two-dimensional micro range-Doppler data 506. The cadence-velocity data 504 is input into a first linear variational autoencoder 508 (1D linear VAE), which generates a cadence-velocity feature vector based on which reconstructed cadence-velocity data can be generated. As further indicated in Fig. 5 based on the reconstructed cadence-velocity data and the original cadence-velocity data 504 a first reconstruction loss can be obtained.

Likewise, a second two-dimensional convolutional neural network-variational autoencoder 510 (2D CNN-VAE) is used to encode the micro range-Doppler data to obtain a range-Doppler feature vector, which serves as basis for generating reconstructed range-Doppler data. The reconstructed range-Doppler data and the original micro range-Doppler data 506 serve as basis for determining a second reconstruction loss. Based on the first and second reconstruction losses the radar data can be classified into whether it is IND or OOD.

Furthermore, in the example shown in Fig. 5 the classifying 16 further comprises combining the range-Doppler feature vector and the cadence-velocity feature vector to obtain a combined feature vector 512 using multihead-attention. Multihead attention means that the two vectors are combined, e.g. element by element, using according weighting of the elements. The weighting can also be a result of prior training. Hence, the combining may use different weightings of different elements of the range-Doppler feature vector and the cadence-velocity feature vector to obtain the combined feature vector 512. As further shown in Fig. 5 the combined feature vector is input into a classifier 514. Although Fig. 5 shows the combining outside the classifier 514, in examples, the combining as well as the classification 516 described subsequently, can be part of the classifier 514. As further shown in Fig. 5 the actual classification at the end provides information on whether the input data is classified as a scene in which a human is present (Presence) or not (Nonpresence). For example, the final decision may be made by carrying out a threshold decision based on an energy score, which is determined by the classifier. Hence, in some examples the classifying 16 may comprise determining an energy score based on the range-Doppler feature vector and the cadence-velocity feature vector and using the energy score to classify the radar data. Furthermore, the classifying may, at least in some examples, also be trained on the bases of the first reconstruction loss, the second reconstruction loss, or both. For example, the determination of the energy score may also be carried out on the basis of the reconstruction loss(es).

The energy score may indicate a compatibility of the range-Doppler feature vector and the cadence-velocity feature vector with data used for training the classifier 514 (the classifying 11, respectively). At least in some examples the classifying 11/classifier 514 may use a trained neural network. The training 25 of the classifier 514 may further comprise training the classifier 514 to determine an energy score based on a pair of a cadence-velocity feature vector and a range-Doppler feature vector, the reconstruction loss(es), respectively. The classified radar data, which is used for training, may comprise information on whether there is a human present in the scene. The training of the classifier 514 may comprise training the classifier to output information on whether a human is present in the scene. The above classification on whether the radar data is IND or OOD can also take place in the classifier 514. The training of the classifier 514 may hence further comprise training the classifier 514 to provide information whether input radar data lies within the distribution of the classified radar data.

The energy score may indicate a compatibility of the feature vectors of the current data with those of the classified data that was used for training. For example, the lower the energy score the higher the compatibility and the higher the energy score the lower the compatibility. Hence, examples may make use of an energy-based model (EBM), which is a form of generative model (GM). In principal such concepts try to learn or isolate statistical properties of the data distribution that is used for training (classified data). One goal is to generate new data sets, which share the same statistical properties using a trained network. Ideally, generated new data sets would have the same statistical distribution as the training data. An energy or energy score may model a composition of latent and observable variables of data sets. In examples, dependencies within the data sets may be captured by associating an unnormalized probability scalar (energy) to each configuration of the combination of observed and latent variables. For example, a trained network may attempt to find data sets based on latent variables, that minimize or optimize the energy score for a set of observed variables from the data set. During training the neural network can be trained to assign low energy scores or values to latent variables that better match or represent the data sets. A classifier may learn a function that associates low energies to correct (better matching) values of the latent variables, and higher energies to incorrect (less matching) values.

In examples, energies or energy scores might not be normalized- such as probabilities. In other words, energies do not need to accumulate to 1. Since there is no need to estimate a normalization constant like probabilistic models do, cf. softmax approaches, certain forms of inference and learning with EBMs in some examples may be more tractable and flexible. OOD detection methods relying on softmax confidence score may make use of overconfident posterior distributions for OOD data. An energy-based OOD detection framework for robust presence sensing on radar signals may be used in examples. Application fields of examples are surveillance, safety, security, as well as domotics (domestic robotics).

Further methods for OOD-detection may belong to the following categories:
- Classification-based methods, in which OOD detection may use the maximum softmax probability as an indicator score of IND. If the maximum score does not exceed a certain threshold, the example is characterized as OOD.
- Density-based methods in OOD detection may explicitly model the in-distribution with some probabilistic models, and flag test data in low-density regions as OOD.
- Distance-based methods may exploit that the testing OOD samples should be relatively far away from the centroids or prototypes of in-distribution classes.
- Reconstruction-based methods may train an encoder-decoder framework on IND data and exploit that usually such a framework yields different outcomes for ID and OOD samples.

Examples may develop a robust presence sensing mechanism, based on radar, using methods of deep learning and energy-based models. Using both macro- and micro-Doppler information, an example system may be able to detect In-Distribution data (e.g. Humans, Humans and OOD data, non-presence) and Out-of-Distribution data (e.g. only curtains, fans, etc.). Additionally, if In-Distribution, an example system may further differentiate between nonpresence and presence. In order to classify between IND and OOD, Generative Autoencorders (GAE) Models using energy functions can be used in some examples. If the Energy of the input is low, the sample is IND, else, it is OOD.

An example architecture may use two parallel pre-processing branches to get the CVD signal and micro RDI signal from raw radar data as outlined above with respect to Fig. 4. As shown in Fig. 5 two Generative Autoencoders - GAE (e.g. Variational Autoencoders - VAE) reconstruction networks for the two kinds of signals may be built and extract the embeddings (feature vectors) from the encoders. The two embeddings can be combined by multihead-attention and fed into a binary classifier. At the classifier an energy-based score from the GAE can be calculated and then be classified. The energy scores can be used to distinguish IND and OOD and/or presence or non-presence of a human in the scene.

In some examples the problem for the classifying can be formulated as an OOD/In-Presence/Non-Presence problem. Those three classes determine if there is only OOD, one or more person with or without OOD, or no-one in the scene and no OOD. Using energy scores and reconstruction loss, the data can be classified into OOD, presence or non-presence.

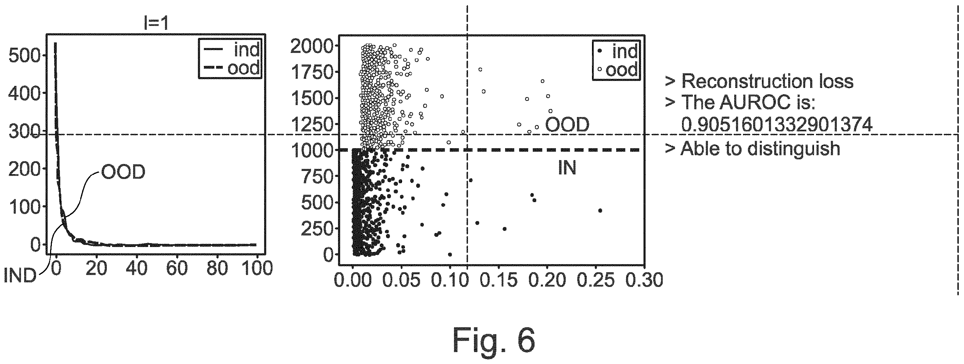

Fig. 6 shows an energy score distribution and an energy score sample plot in an example scene with a walking human. In the following Figs. 6, 7 and 8 the chart on the left shows the relative occurrence of energy scores for IND and OOD data sets. The charts on the right show plots of energy scores for IND below the broken line and for OOD above the broken line. In Fig. 6 it can be seen that by setting a threshold for the energy score to distinguish between OOD and IND around 0.02 would enable to correctly decide most of the cases (area under receiver operating characteristic (AUROC) is around 90%).

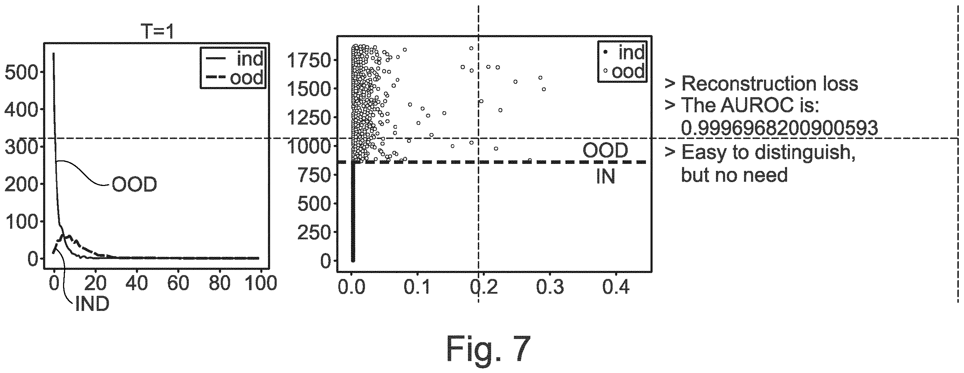

Fig. 7 shows an energy score distribution and an energy score sample plot in an example scene without human presence. Fig. 7 shows the pair of charts for human absence (non-presence).

Here one can see that the OOD and IND distribution differ even more and a threshold at around 0.01 would be suitable to distinguish most of the cases (AUROC 99%).

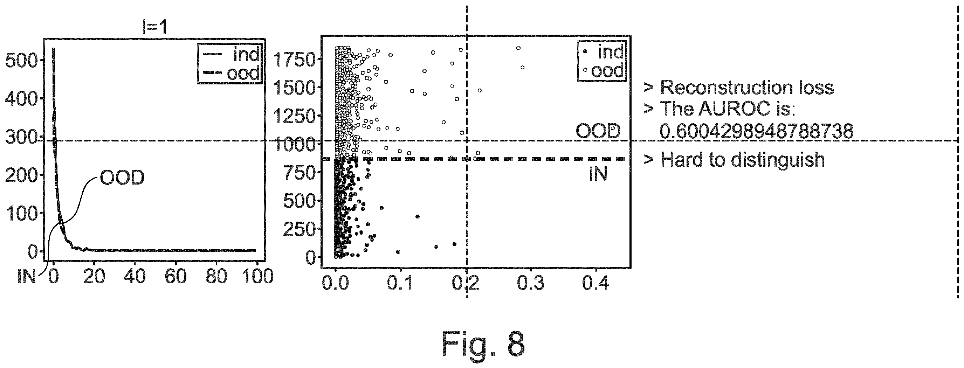

Fig. 8 shows an energy score distribution and an energy score sample plot in an example scene with a sitting human. Fig. 8 shows the two charts for a sitting human and in this example, the energy scores are harder to distinguish (AUROC 60%).

As indicated in Figs. 6, 7 and 8 these examples may enable promising results. Examples may enable robust detection of OOD towards unknown objects. Meaning, from the radar data examples may detect presence by any kind of anomalies, even of unusual or unseen scenarios.

Examples may enable a strong ability to detect static humans by using parallel pre-processing and combining both CVD signal and micro RDI together. Using two GAE models to extract feature vectors may ensure the embeddings extracted contain the information carried by the original signal. By using the energy function, the robustness of the model may be further enhanced, it may enable the identification of interferences that the model has not seen during training and report the unseen data to users. For further exploration, the energy-based mapping function may also be used for other signal models to detect the outlier data from the in-distribution input.

Examples may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of radar images (CVD, RDI) may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data may be pre-processed to obtain a feature vector, which is used as input to the machine-learning model.

Machine-learning models may be trained using training input data. The examples specified above may use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range).

Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In examples, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for classifying radar data from a scene, the method (10) comprising
Obtaining (11) radar data from the scene;
Determining (12) cadence-velocity data and micro range-Doppler data from the radar data;
Encoding (13) the cadence velocity data to obtain a cadence-velocity feature vector using a first trained autoencoder and encoding the micro range-Doppler data to obtain a range-Doppler feature vector using a second trained autoencoder;
Decoding (14) the cadence-velocity feature vector to obtain reconstructed cadence-velocity data using a first trained decoder and decoding the range-Doppler feature vector to obtain reconstructed range-Doppler data using a second trained decoder;
Determining (15) first reconstruction loss information based on the cadence-velocity data and the reconstructed cadence-velocity data and determining second reconstruction loss information based on the range-Doppler data and the reconstructed range-Doppler data; and
Classifying (16) the radar data based on the first reconstruction loss information and the second reconstruction loss information.

2. The method (10) of claim 1, wherein the classifying (16) further comprises combining the range-Doppler feature vector and the cadence-velocity feature vector to obtain a combined feature vector using multihead-attention.

3. The method (10) of claim 2, wherein the combining uses different weightings of different elements of the range-Doppler feature vector and the cadence-velocity feature vector to obtain the combined feature vector.

4. The method (10) of one of the claims 1 to 3, wherein the classifying (16) comprises providing information on whether the radar data lies in a data distribution used to train the autoencoders and decoders.

5. The method (10) of one of the claims 1 to 4, wherein the classifying (16) comprises providing information on whether one or more humans are present in the scene.

6. The method (10) of one of the claims 1 to 5, wherein the classifying (16) comprises determining an energy score based on the range-Doppler feature vector and the cadence-velocity feature vector and using the energy score to classify the radar data, wherein the energy score indicates a compatibility of the range-Doppler feature vector and the cadence-velocity feature vector with data used for training the classifying.

7. The method (10) of one of the claims 1 to 6, wherein the classifying (16) uses a trained neural network.

8. The method (10) of one of the claims 1 to 7, wherein the first trained autoencoder and the first trained decoder form a first trained generative autoencoder, and wherein the second trained autoencoder and the second trained decoder form a second generative autoencoder.

9. The method (10) of one of the claims 1 to 8, wherein the obtaining (11) of the radar data from the scene comprises receiving and sampling a radar signal reflected from the scene.

10. An apparatus (30) for classifying radar data from a scene, the apparatus (30) comprising
one or more interface (32) configured to receive radar data from the scene; and
one or more processing device (34) configured to perform one of the methods (10) of claims 1 to 9.

11. A computer program having a program code for performing the method (10) of one of the claims 1 to 9, when the computer program is executed on a computer, a processor, or a programmable hardware component.

12. A method (20) for training one or more neural networks to classify radar data, the method (20) comprising
Obtaining (21) classified radar data from a scene;
Determining (22) classified cadence-velocity data and classified micro range-Doppler data from the radar data;
Training (23) a first autoencoder-decoder pair based on the classified cadence-velocity data to obtain cadence-velocity feature vectors from the first trained autoencoder;
Training (24) a second autoencoder-decoder pair based on the classified range Doppler data to obtain range-Doppler feature vectors from the second trained autoencoder; and
Training (25) a classifier based on the classified radar data, the cadence-velocity feature vectors and the range-Doppler feature vectors.

13. The method (20) of claim 12, wherein the training (23) of the first autoencoder-decoder pair and the training (24) of the second autoencoder-decoder pair comprises training with respect to optimized reconstruction losses at the first and second decoders.

14. The method (20) of one of the claims 12 or 13, wherein the training (25) of the classifier further comprises training the classifier to determine an energy score based on a pair of a cadence-velocity feature vector and a range-Doppler feature vector.

15. The method (20) of one of the claims 12 to 14, wherein the classified radar data comprises information on whether there is a human present in the scene and wherein the training of the classifier comprises training the classifier to output information on whether a human is present in the scene.

16. The method of (20) one of the claims 12 to 15, wherein the training (25) of the classifier further comprises training the classifier to provide information whether input radar data lies within the distribution of the classified radar data.

17. An apparatus (30) for training one or more neural networks to classify radar data, the apparatus (30) comprising
one or more interface (32) configured to receive radar data from the scene;
one or more processing device (34) configured to perform one of the methods (20) of claims 12 to 16.

18. A computer program having a program code for performing the method (20) of one of the claims 12 to 16, when the computer program is executed on a computer, a processor, or a programmable hardware component.

## Amended claims

### Amended claims in accordance with Rule 137(2) EPC.

1. A method (10) for classifying radar data from a scene, the method (10) comprising
Obtaining (11) radar data from the scene;
Determining (12) cadence-velocity data and micro range-Doppler data from the radar data, wherein the cadence-velocity data provides a measure on how often different velocities repeat and wherein the micro range-Doppler data comprises micro-Doppler shifts, which are evoked by micro-movements of a macro reflector;
Encoding (13) the cadence velocity data to obtain a cadence-velocity feature vector using a first trained autoencoder and encoding the micro range-Doppler data to obtain a range-Doppler feature vector using a second trained autoencoder;
Decoding (14) the cadence-velocity feature vector to obtain reconstructed cadence-velocity data using a first trained decoder and decoding the range-Doppler feature vector to obtain reconstructed range-Doppler data using a second trained decoder;
Determining (15) first reconstruction loss information based on the cadence-velocity data and the reconstructed cadence-velocity data and determining second reconstruction loss information based on the range-Doppler data and the reconstructed range-Doppler data; and
Classifying (16) the radar data based on the first reconstruction loss information and the second reconstruction loss information.

2. The method (10) of claim 1, wherein the classifying (16) further comprises combining the range-Doppler feature vector and the cadence-velocity feature vector to obtain a combined feature vector using multihead-attention.

3. The method (10) of claim 2, wherein the combining uses different weightings of different elements of the range-Doppler feature vector and the cadence-velocity feature vector to obtain the combined feature vector.

4. The method (10) of one of the claims 1 to 3, wherein the classifying (16) comprises providing information on whether the radar data lies in a data distribution used to train the autoencoders and decoders.

5. The method (10) of one of the claims 1 to 4, wherein the classifying (16) comprises providing information on whether one or more humans are present in the scene.

6. The method (10) of one of the claims 1 to 5, wherein the classifying (16) comprises determining an energy score based on the range-Doppler feature vector and the cadence-velocity feature vector and using the energy score to classify the radar data, wherein the energy score indicates a compatibility of the range-Doppler feature vector and the cadence-velocity feature vector with data used for training the classifying.

7. The method (10) of one of the claims 1 to 6, wherein the classifying (16) uses a trained neural network.

8. The method (10) of one of the claims 1 to 7, wherein the first trained autoencoder and the first trained decoder form a first trained generative autoencoder, and wherein the second trained autoencoder and the second trained decoder form a second generative autoencoder.

9. The method (10) of one of the claims 1 to 8, wherein the obtaining (11) of the radar data from the scene comprises receiving and sampling a radar signal reflected from the scene.

10. An apparatus (30) for classifying radar data from a scene, the apparatus (30) comprising
one or more interface (32) configured to receive radar data from the scene; and
one or more processing device (34) configured to perform one of the methods (10) of claims 1 to 9.

11. A computer program having a program code for performing the method (10) of one of the claims 1 to 9, when the computer program is executed on a computer, a processor, or a programmable hardware component.

12. A method (20) for training one or more neural networks to classify radar data, the method (20) comprising
Obtaining (21) classified radar data from a scene;
Determining (22) classified cadence-velocity data and classified micro range-Doppler data from the radar data, wherein the cadence-velocity data provides a measure on how often different velocities repeat and wherein the micro range-Doppler data comprises micro-Doppler shifts, which are evoked by micro-movements of a macro reflector;
Training (23) a first autoencoder-decoder pair based on the classified cadence-velocity data to obtain cadence-velocity feature vectors from the first trained autoencoder;
Training (24) a second autoencoder-decoder pair based on the classified range Doppler data to obtain range-Doppler feature vectors from the second trained autoencoder; and
Training (25) a classifier based on the classified radar data, the cadence-velocity feature vectors and the range-Doppler feature vectors.

13. The method (20) of claim 12, wherein the training (23) of the first autoencoder-decoder pair and the training (24) of the second autoencoder-decoder pair comprises training with respect to optimized reconstruction losses at the first and second decoders.

14. The method (20) of one of the claims 12 or 13, wherein the training (25) of the classifier further comprises training the classifier to determine an energy score based on a pair of a cadence-velocity feature vector and a range-Doppler feature vector.

15. The method (20) of one of the claims 12 to 14, wherein the classified radar data comprises information on whether there is a human present in the scene and wherein the training of the classifier comprises training the classifier to output information on whether a human is present in the scene.

16. The method of (20) one of the claims 12 to 15, wherein the training (25) of the classifier further comprises training the classifier to provide information whether input radar data lies within the distribution of the classified radar data.

17. An apparatus (30) for training one or more neural networks to classify radar data, the apparatus (30) comprising
one or more interface (32) configured to receive radar data from the scene;
one or more processing device (34) configured to perform one of the methods (20) of claims 12 to 16.

18. A computer program having a program code for performing the method (20) of one of the claims 12 to 16, when the computer program is executed on a computer, a processor, or a programmable hardware component.
